# EUROPÄISCHE PATENTSCHRIFT

(11) **EP 3 930 037 B1**
(45) Veröffentlichungstag und Bekanntmachung des Hinweises auf die Patenterteilung: **11.09.2024**
(21) Anmeldenummer: 21182196.2
(22) Anmeldetag: 28.06.2021
(51) Int. Cl.: H01M 4/04, H01M 4/139, H01M 4/36, H01M 4/62, H01M 4/66, H01M 4/38, H01M 4/02

(54) **ENERGIESPEICHER UND VERFAHREN ZUR HERSTELLUNG EINES ENERGIESPEICHERS**
ENERGY STORAGE DEVICE AND METHOD OF MANUFACTURING AN ENERGY STORAGE DEVICE
DISPOSITIF DE STOCKAGE D ÉNERGIE ET PROCÉDÉ DE FABRICATION D'UN DISPOSITIF DE STOCKAGE D ÉNERGIE

(30) Priorität: 26.06.2020 DE 102020116944; 26.06.2020 DE 102020116946; 26.06.2020 DE 102020116945
(43) Veröffentlichungstag der Anmeldung: 29.12.2021
(73) Patentinhaber: InvestHG UG (haftungsbeschränkt), 01900 Großröhrsdorf (DE)
(72) Erfinder: Gritzka, Holger, 01900 Großröhrsdorf (DE)
(74) Vertreter: Herrmann, Gero

(56) Entgegenhaltungen:
- WO-A1-2014/037828
- US-A1- 2003 165 744
- US-A1- 2006 251 965
- US-A1- 2011 256 440
- US-A1- 2014 302 373
- US-A1- 2017 288 232
- US-A1- 2020 119 333
- US-B2- 10 418 631

## Beschreibung

### Technisches Gebiet

Die Erfindung bezieht sich auf einen Energiespeicher, insbesondere einen Energiespeicher, der eine elektrochemische Zelle enthält. Unter einem weiteren Gesichtspunkt bezieht sich die Erfindung auf ein Herstellungsverfahren für einen derartigen Energiespeicher.

### Technischer Hintergrund

Eine elektrochemische Zelle umfasst eine Kathode, also eine positive Elektrode, eine Anode, also eine negative Elektrode, sowie einen Separator, der die positive Elektrode von der negativen Elektrode trennt. Bei einer konventionellen Batteriezelle sind in einem Gehäuse die positive Elektrode, die negative Elektrode, der Separator und ein flüssiger Elektrolyt aufgenommen, in dem die vorgenannte positive Elektrode, die negative Elektrode und der Separator zumindest teilweise aufgenommen sind. Bei einer Festkörperbatteriezelle ist der Separator mit einem festen Elektrolyten gebildet. Die Anode und Kathode können über Kontakte einen Stromkreis mit einem Verbraucher ausbilden. Eine elektrochemische Zelle kann für Energiespeicher in Form einer Primärbatterie oder einer Sekundärbatterie zum Einsatz kommen. Als Primärbatterie wird eine nicht wiederaufladbare Batterie bezeichnet, die für den einmaligen Gebrauch bestimmt ist. Als Sekundärbatterie oder Akkumulator wird eine Batterie bezeichnet, die wiederaufladbar ist.

Bei einem bekannten Rolle-zu-Rolle-Nassbeschichtungsverfahren zur Herstellung von Batteriezellen wird eine geringviskose Aufschlämmung mit einem jeweiligen Elektrodenmaterial für die Anode bzw. Kathode jeweils beidseitig und nacheinander auf einem metallischen Ableiter aufgebracht und das Lösungsmittel danach verdampft. Zur Zellassemblierung werden die so entstandenen Elektrodenrollen dann geschnitten und zusammen mit einem Separator abwechselnd (Anode, Separator, Kathode) solange gestapelt, bis eine gewünschte Kapazität erreicht ist. Danach wird der Stapel elektrisch verbunden und in ein Gehäuse, z.B. einen Folienbeutel, eingepackt. Anschließend wird noch ein flüssiger Elektrolyt eingefüllt und das Gehäuse verschlossen. Die resultierende Zelle hat eine Nominalspannung von ca. 3,2 V, je nach Kathodenmaterial. Die US 2020 / 0 119 333 A1 offenbart ein Verfahren zur Herstellung einer Filmelektrode für eine elektrische Speichervorrichtung, bei dem zunächst ein gewünschtes Elektrodenmuster, wie z. B. ein isolierender Rahmen, durch ein Beschichtungsverfahren mit relativ hoher Präzision, wie z. B. Siebdruck, Tiefdruckbeschichtung, Tintenstrahlbeschichtung, Dispenserzeichnen und dergleichen, gebildet wird. Anschließend wird ein aufschlämmungsartiges aktives Material auf das Muster aufgetragen, und das resultierende Produkt wird getrocknet.

Die US 5 035 965 A offenbart ein Herstellungsverfahren für eine flexible Dünnschichtzelle, bei dem auf einer Lithium-Aluminium-Folie als Material negativer Polarität ein Elektrolytmaterial und auf diesem ein Material positiver Polarität jeweils durch einen Siebdruckvorgang aufgebracht und in einem UV-Kalzinierofen getrocknet wird. Die Viskosität des in der Siebdruckvorrichtung verwendeten Polymers ist auf etwa 30 Pa s eingestellt. Unter gleichen Bedingungen wird in einem weiteren Siebdruck- und Trockenvorgang ein Ableiter aufgebracht. Die Dünnschichtzelleinheiten werden anschließend zwischen Gehäusematerialien mit Leitungsanschlüssen laminiert, unter Evakuierung fusionsgebondet und in vorbestimmte Größen geschnitten. Eine Mehrschichtstruktur kann hergestellt werden, indem vor dem Aufbringen des Ableiters Lithium-Aluminium-Folie auf das Material positiver Polarität fusionsgebondet wird und das Aufbringen und Trocknen des Elektrolytmaterials und des Materials positiver Polarität wiederholt werden.

Ein Nachteil der obigen Herstellungsverfahren besteht in der Vielzahl unterschiedlicher Fertigungsschritte, die mittels unterschiedlich spezialisierter Fertigungsvorrichtungen auszuführen sind. Dies bedingt nicht nur eine aufwendig gestaltete Fertigungsanlage, sondern darüber hinaus während des Herstellungsablaufs zeitaufwendige Bewegungen der Zwischenprodukte von einer Fertigungsvorrichtung in die andere.

Die US 2006 / 0 251 965 A1 offenbart ein Herstellungsverfahren für eine Sekundärzellenelektrode, die eine auf einem Kollektor ausgebildete Elektrodenaktivmaterialschicht aufweist. Eine zum Zusammensetzen der Elektrodenaktivmaterialschicht hinzuzufügende Menge eines Feststoffs wird geändert, wodurch eine Vielzahl von Elektrodenschlammarten mit unterschiedlicher Konzentration des Feststoffs hergestellt werden. Der Kollektor wird mit der Vielzahl von Elektrodenschlammarten beschichtet, so dass eine Vielzahl von Dünnfilmschichten mit unterschiedlicher Konzentration des Feststoffs laminiert werden. Das Beschichten kann durch ein Siebdruckverfahren erfolgen. Die WO 2014 / 037 828 A1 offenbart ein Verfahren zur Herstellung einer Gasdiffusionselektrode für wiederaufladbare, elektrochemische Metall-Sauerstoff-Zellen, umfassend folgende Schritte: (1) Bereitstellung eines porösen Trägers, (2) Herstellung einer Dispersion oder Lösung einer Katalysator enthaltenen Masse als Beschichtungsmasse, (3) Auftragen der Beschichtungsmasse in Dispersion oder Lösung durch Siebdruck, Sprühen oder Rakeln, (4) Trocknen der aufgetragenen Beschichtungsmasse, (5) Kalandrieren, Pressen und Verdichten sowie (6) Auftrag wenigstens einer weiteren Beschichtungsmasse, deren Zusammensetzung von der in Schritt 3 eingesetzten Masse unterschiedlich ist.

Die FR 2 690 567 A1 schlägt ein Herstellungsverfahren für einen elektrochemischen Generator mit einer geringen Dicke von zwischen 10 µm und 100 µm vor, bei dem auf einem Glas-Epoxy-Verbundträger nach- und übereinander ein Kathodenstromableiter, eine Kathode, ein Elektrolytabscheider, eine Anode, ein Anodenstromableiter und ein Verkapselungsmaterial jeweils mittels teils mehrschichtiger Siebdruckvorgänge aufgebracht werden, gefolgt von dreistündigem Trocknen bei 100 °C unter Primärvakuum nach jeder Schicht. Der Elektrolytabscheider, der Anodenstromableiter und das Verkapselungsmaterial sind seitlich der Kathode und Anode schräg bis auf den Glas-Epoxy-Verbundträger hinabgeführt, wobei außenliegende Abschnitte der Stromableiter vom Verkapselungsmaterial unbedeckt bleiben.

Bei diesem Verfahren erfolgt die Herstellung zwar mittels einer Abfolge ähnlicher Verfahrensschritte. Ebenso wie bei den in der US 5 035 965 A, US 2006 / 0 251 965 A1 und WO 2014 / 037 828 A1 offenbarten Herstellungsverfahren besteht jedoch das Problem, dass mittels der Siebdruckvorgänge lediglich dünne Schichten erzeugt werden, was die pro Fläche des Energiespeichers erzielbare Speicherkapazität beschränkt. Ferner führen lange Trocknungszeiten nach dem Siebdrucken der einzelnen Schichten, dass für das Herstellen eines Energiespeichers eine erhebliche Zeit aufgewandt werden muss, die sich bei Ausbildung von z. B. einer Elektrode aus mehreren Einzelschichten weiter erhöht.

Ferner besteht das Problem, dass bei größerer Höhe der Anodenoberseite über dem Glas-Epoxy-Verbundträger der schräg nach unten verlaufende Anodenableiter nicht nur mehr Metall und seitlichen Bauraum benötigen, sondern aufgrund zunehmend freischwebenden Verlaufs auch an Stabilität einbüßt. Die daraus folgende Beschränkung der Höhe der Anodenoberseite über dem Glas-Epoxy-Verbundträger beschränkt bei gegebenem seitlichen Bauraum auch die erzielbare Kapazität des Energiespeichers, die sich typischerweise proportional zur Dicke insbesondere der Kathode verhält.

Es ist daher eine Aufgabe der Erfindung, bei geringgehaltenem, insbesondere zeitlichem, Aufwand des Herstellungsverfahrens die bei gegebener seitlicher Ausdehnung erzielbare Kapazität des Energiespeichers zu erhöhen.

### Offenbarung der Erfindung

Die Aufgabe wird gelöst durch ein Verfahren zur Herstellung eines Energiespeichers gemäß Patentanspruch 1 oder einen Energiespeicher gemäß Patentanspruch 10. Das Verfahren umfasst einen Schritt des Siebdruckens, auf einer Druckauflage, welche zur Auflage eines Zellelements oder Zellstapels des Energiespeichers ausgebildet ist, einer ersten Paste, um eine erste Elektrodenteilschicht einer Elektrodenschicht des Zellelements oder Zellstapels aufzutragen, und einen Schritt des Siebdruckens einer zweiten Paste, welche von der ersten Paste verschieden zusammengesetzt ist, unmittelbar auf die erste Elektrodenteilschicht, um eine zweite Elektrodenteilschicht der Elektrodenschicht aufzutragen. Die erste Paste und die zweite Paste weisen ein identisches aktives Material auf. Die zweite Elektrodenteilschicht wird dünner als die erste Elektrodenteilschicht aufgetragen.

Die Ausdrücke "über", "Auflage", "Druckauflage" und "auf sind in der vorliegenden Beschreibung und den Ansprüchen durchweg bezogen auf eine Druckrichtung des Siebdruckens gemeint, die vorzugsweise, aber nicht notwendigerweise, mit der Richtung der Schwerkraft während der Siebdruckschritte übereinstimmt. So bezeichnet die obere Elektrodenschicht eine Elektrodenschicht des Zellelements, die weiter oben angeordnet ist, als eine andere Elektrodenschicht des Zellelements. Auch sonst beziehen sich im allgemeinen Sprachgebrauch auf die Schwerkraftrichtung bezogene Begriffe wie "oben", "unten", "Oberseite", "Höhe" oder "neben" vorliegend stets auf die Druckrichtung. Entsprechend bezieht sich der Begriff "Gehäuseseitenwand" auf eine Gehäusewand, die eine seitlich weisende Flächennormale hat und sich somit parallel zu der Druckrichtung erstreckt. Mit "Druckauflage" ist eine Abstützung entgegen der Druckrichtung gemeint, z. B. in Form einer ebenen Tischplatte. Sofern nicht ausdrücklich anders angegeben, bedeutet in der vorliegenden Beschreibung und den Ansprüchen Siebdrucken auf einem Element nicht notwendigerweise, dass das siebgedruckte Material unmittelbar auf dem genannten Element aufgebracht wird, sondern kann auch bedeuten, dass zwischen dem genannten Element und dem siebgedruckten Material ein oder mehrere weitere Elemente angeordnet sind, die von dem genannten Element entgegen der Druckrichtung abgestützt werden. Beispielsweise kann das Ausbilden der Elektrodenschicht auf der Druckauflage auch bedeuten, dass die Elektrodenschicht auf einer metallischen Ableiterschicht siebgedruckt wird, unter welcher sich ein Gehäuseboden befindet, der auf der Druckauflage aufliegt und von ihr entgegen der Druckrichtung abgestützt wird. Ebenso kann Siebdrucken einer Gehäuseseitenwand auf der Druckauflage auch bedeuten, dass die Gehäuseseitenwand auf einem Gehäuseboden siebgedruckt wird, der auf der Druckauflage aufliegt und von ihr entgegen der Druckrichtung abgestützt wird. Mit dem Begriff "Elektrodenschicht" ist sowohl eine Schicht gemeint, die für sich bereits eine Elektrode des Energiespeichers bildet, als auch eine von mehreren Elektrodenteilschichten, die übereinandergeschichtet gemeinsam die Elektrode bilden.

Das Verfahren verwendet Siebdruckvorgänge, um die Elektrodenteilschichten auszubilden, so dass für beide Elektrodenteilschichten eine - vorzugsweise dieselbe - Vorrichtung eingesetzt wird, die auch für die Bildung weiterer Elemente des Energiespeichers wie z. B. Ableiter- oder Separatorschichten verwendbar ist. Dies ermöglicht den Verfahrensaufwand geringzuhalten. Da das Siebdrucken mit unterschiedlich zusammengesetzten Pasten erfolgt, kann, indem z. B. ein Lösungsmittelgehalt der beiden Pasten unterschiedlich festgesetzt wird, das Trocknungsverhalten der Pasten derart optimiert werden, dass die Summe der Trocknungszeiten verkürzt wird. Ferner ermöglicht die unterschiedliche Zusammensetzung der Pasten, Konzentrationsgradienten in der Elektrodenschicht zu erzeugen, durch die weitere Eigenschaften des Energiespeichers wie z. B. die Speicherkapazität oder Lebensdauer optimierbar sind oder gewünschte besondere Eigenschaften des Energiespeichers einstellbar sind.

Unter einem weiteren Gesichtspunkt schafft die Erfindung einen Energiespeicher, welcher ein Zellelement oder einen Zellstapel mit einer durch Siebdrucken aufgetragenen ersten Elektrodenteilschicht und einer auf die erste Elektrodenteilschicht durch Siebdrucken aufgetragenen zweiten Elektrodenteilschicht aufweist, wobei die erste Elektrodenteilschicht und die zweite Elektrodenteilschicht verschieden zusammengesetzt sind. Die erste Elektrodenteilschicht und die zweite Elektrodenteilschicht weisen ein identisches aktives Material auf. Die zweite Elektrodenteilschicht ist dünner aufgetragen als die erste Elektrodenteilschicht.

Vorzugsweise weist die erste Paste eine Ruheviskosität von mindestens 200 Pa s auf. Daher bleibt die siebgedruckte erste Elektrodenteilschicht auch bei größeren Dicken in der erzeugten geometrischen Form, ohne zu zerfließen. Dies ermöglicht die Ausbildung der Elektrodenteil- und damit der Elektrodenschicht mit besonders großer Dicke, um so ein Energiespeicher mit großer Speicherkapazität pro Fläche herzustellen. Außerdem ermöglicht die hohe Ruheviskosität von mindestens 200 Pa s, die Paste mit einem besonders geringen Lösungsmittelanteil zuzubereiten, wodurch sich die nach dem Siebdrucken der Elektrodenschicht erforderliche Trocknung bis auf wenige Minuten verkürzt. Hierdurch verkürzt sich weiter die für die Herstellung des Energiespeichers benötigte Zeit.

Gemäß einer bevorzugten Weiterbildung wird die erste Elektrodenteilschicht mit einer Dicke von mindestens 50 µm aufgetragen. Dies ermöglicht, ohne großen Zeitaufwand eine Elektrodenschicht größerer Dicke aus wenigen Elektrodenteilschichten aufzubauen, um so z. B. eine Speicherkapazitätserhöhung des Energiespeichers zu erreichen.

Gemäß einer bevorzugten Weiterbildung wird die zweite Elektrodenteilschicht mit einer Dicke von höchstens 50 µm aufgetragen. Dies ermöglicht, z. B. an der oberen Begrenzung der Elektrodenschicht gewünschte besondere Grenzflächeneigenschaften vorzusehen, um beispielsweise eine besonders glatte und rissfreie Grenzfläche vorzusehen und/oder einen allmählichen Übergang zu dem Material einer auf der Elektrodenschicht benachbart auszubildenden Schicht vorzusehen. Vorzugsweise wird die zweite Elektrodenteilschicht mit einer Dicke von höchstens 20 µm aufgetragen.

Gemäß einer bevorzugten Weiterbildung weist die zweite Paste einen höheren Gehalt eines ionischen Leiters oder einen geringeren Gehalt eines elektrischen Leiters auf als die erste Paste. Dies ermöglicht einen fließenden Übergang von einem elektrischen Leitermaterial der Elektrodenschicht zu einem ionischen Leitermaterial einer über der Elektrodenschicht vorzusehenden Separator- bzw. Festelektrolytschicht, um z. B. die Lebensdauer oder andere Eigenschaften des Energiespeichers zu verbessern.

Gemäß einer alternativ bevorzugten Weiterbildung weist die zweite Paste einen geringeren Gehalt eines ionischen Leiters oder einen höheren Gehalt eines elektrischen Leiters auf als die erste Paste. Dies ermöglicht einen fließenden Übergang von einem elektrischen Leitermaterial der Elektrodenschicht zu einem ionischen Leitermaterial einer unter der Elektrodenschicht vorgesehenen Separator- bzw. Festelektrolytschicht, um z. B. die Lebensdauer oder andere Eigenschaften des Energiespeichers zu verbessern.

Gemäß einer bevorzugten Weiterbildung weist die zweite Paste einen höheren Lösungsmittelgehalt auf als die erste Paste. Dies ermöglicht eine besonders glatte und rissfreie obere Grenzfläche der Elektrodenschicht, da auf diese Weise die erste Paste mit geringerer Viskosität bereitgestellt werden kann, so dass nach dem Siebdrucken der zweiten Elektrodenteilschicht durch Verfließen der siebgedruckten Paste eine glatte Oberfläche ausbildet, während zugleich die erforderliche Trocknungszeit kurz gehalten werden kann, da die unter der zweiten Elektrodenteilschicht verborgene erste Elektrodenteilschicht weniger des durch das Trocknen zu verflüchtigenden Lösungsmittels enthält.

Gemäß einer bevorzugten Weiterbildung umfasst das Verfahren ferner einen Schritt des Trocknens der ersten Elektrodenteilschicht über eine Trocknungszeit von höchstens 10 min vor dem Siebdrucken der zweiten Paste. Auf diese Weise kann eine besonders kurze Herstellungszeit erreicht werden. Vorzugsweise dauert die Trocknungszeit höchstens 6 min.

### Kurze Beschreibung der Zeichnungen

Nachfolgend werden Energiespeicher und Verfahren gemäß der Erfindung anhand einiger Ausführungsformen dargestellt. Es zeigen:
- Fig. 1: eine schematische Querschnittsansicht eines Energiespeichers gemäß einer Ausführungsform, der nach einem Verfahren gemäß einer Ausführungsform hergestellt ist,
- Fig. 2: eine schematische angeschnittene Vorderansicht einer Vorrichtung zur Herstellung eines Energiespeichers nach einem Verfahren gemäß einer Ausführungsform, beim Ausbilden einer ersten Elektrodenschicht des Energiespeichers aus Fig. 1,
- Fig. 2A: eine ausschnitthafte Vergrößerung der Elektrodenschicht aus Fig. 2,
- Fig. 3: die Vorrichtung aus Fig. 2 beim Ausbilden einer zweiten Elektrodenschicht des Energiespeichers,
- Fig. 4: ein Flussdiagramm eines Verfahrens zur Herstellung eines Energiespeichers gemäß einer Ausführungsform,
- Fig. 5A-S: schematische Querschnittsansichten von Schritten eines Verfahrens, gemäß einer Ausführungsform, zur Herstellung eines Energiespeichers gemäß einer Ausführungsform, zu sehen in Fig. 5R,
- Fig. 6: eine schematische Querschnittsansicht eines Energiespeichers gemäß einer Ausführungsform, der nach einem Verfahren gemäß einer Ausführungsform hergestellt ist,
- Fig. 7: eine schematische Querschnittsansicht eines Energiespeichers gemäß einer Ausführungsform und
- Fig. 8: ein Flussdiagramm eines Verfahrens gemäß einer Ausführungsform zur Herstellung des Energiespeichers aus Fig. 7.

### Detaillierte Beschreibung der Zeichnungen

In den Zeichnungen sind, sofern nicht ausdrücklich anders angegeben, gleiche oder äquivalente Elemente mit gleichen Bezugszeichen versehen.

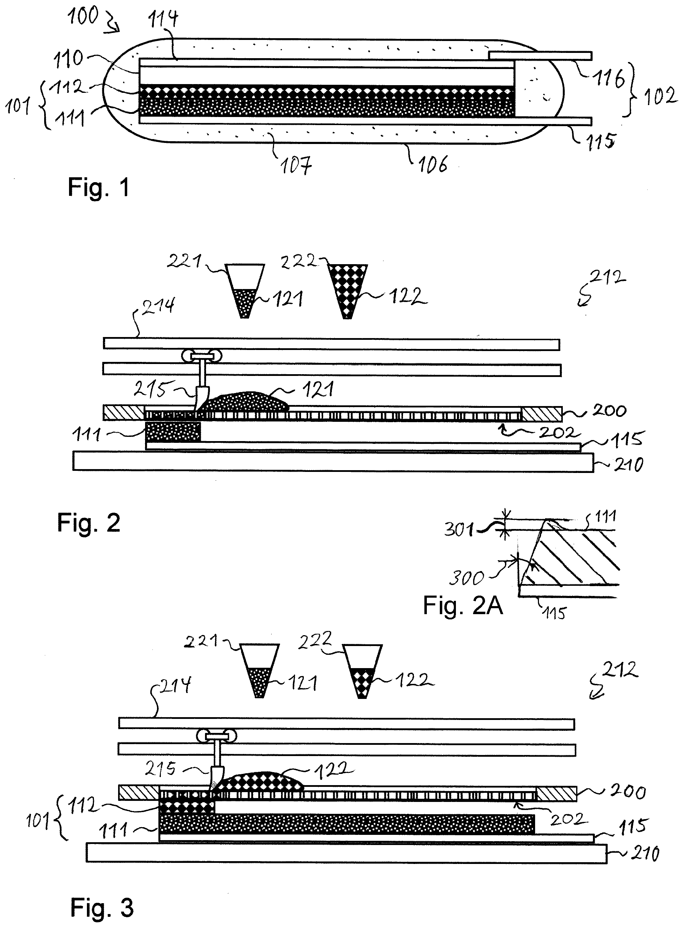

Fig. 1 zeigt, in einer schematischen Querschnittsansicht, einen Energiespeicher 100, der z. B. als eine Primär- oder Sekundärbatterie ausgebildet sein kann. Der Energiespeicher 100 umfasst ein fluiddichtes Gehäuse 106, z. B. in Form einer festen Kapsel oder eines Folienbeutels, das mit einem Flüssigelektrolyten 107 gefüllt ist. Im Flüssigelektrolyten 107 innerhalb des Gehäuses 106 aufgenommen ist ein elektrochemisches Zellelement 102. Das Zellelement 102 ist ein flächenhaft ausgedehnter, aus mehreren Schichten 110, 111, 112, 114 aufgebauter Schichtkörper, der eine erste Elektrodenschicht 101 und eine zweite Elektrodenschicht 114 aufweist. Zwischen der ersten Elektrodenschicht 101 und der zweiten Elektrodenschicht 114 befindet sich eine Separatorschicht 110 aus einem porösen Material, das von dem Flüssigelektrolyten 107 durchdrungen ist.

Die erste Elektrodenschicht 101 besteht aus einer an die Separatorschicht 110 angrenzenden zweiten Elektrodenteilschicht 112 und eine an die von der Separatorschicht 110 abgewandte Seite der zweiten Elektrodenteilschicht 112 angrenzende erste Elektrodenteilschicht 111. Die zweite Elektrodenteilschicht 112 ist dünner als die erste Elektrodenteilschicht 111. Beispielsweise weist die erste Elektrodenteilschicht 111 eine Dicke von 150 µm auf, während die zweite Elektrodenteilschicht 112 eine Dicke von 50 µm aufweist. Beide Elektrodenteilschichten 111, 112 weisen ein aktives Material auf, welches geeignet ist, als Elektronendonor oder lonendonor oder als Elektronenrezeptor oder lonenrezeptor zu wirken. Insbesondere können während des Entladungsvorgangs des Energiespeichers 100 Elektronen durch eine chemische Reaktion in dem aktiven Material freigesetzt werden. Insbesondere können während eines Ladungsvorgangs des Energiespeichers 100 Elektronen oder Ionen durch eine chemische Reaktion in dem aktiven Material gebunden werden. Insbesondere kann es sich bei den chemischen Reaktionen um elektrochemische Reaktionen handeln. Die chemischen Reaktionen können reversibel ablaufen, je nachdem, ob der Energiespeicher entladen wird, um elektrische Energie bereitzustellen oder der Energiespeicher für die spätere Bereitstellung von elektrischer Energie aufgeladen wird. Die zweite Elektrodenteilschicht 112 enthält eine Beimischung des Separatormaterials, so dass sie poröser als die erste Elektrodenteilschicht 111, jedoch weniger porös als die Separatorschicht 110 ist. Hierdurch ergibt sich ein abfallender Konzentrationsgradient des Flüssigelektrolyten 107 von der Separatorschicht 110 über die zweite Elektrodenteilschicht 112 zur ersten Elektrodenteilschicht 111.

An der von der zweiten Elektrodenteilschicht 112 abgewandten Seite der ersten Elektrodenteilschicht 111 ist eine erste metallische Ableiterschicht 115 gebildet, die sich über die gesamte Fläche der ersten Elektrodenteilschicht 111 sowie durch die Wandung des Gehäuses 106 in den Außenraum erstreckt. Die zweite Elektrodenschicht 114 weist ein metallisches Material, z. B. ein Alkalimetall wie Lithium oder Natrium auf. An der von der Separatorschicht 110 abgewandten Seite der zweiten Elektrodenschicht 114 ist eine zweite metallische Ableiterschicht 116 gebildet, die einen Teil der Fläche der zweiten Elektrodenschicht 114 bedeckt sowie sich durch die Wandung des Gehäuses 106 in den Außenraum erstreckt. Die im Außenraum zugänglichen Enden der metallischen Ableiterschichten 115, 116 bilden elektrische Anschlüsse des Energiespeichers 100, um dem Energiespeicher 100 elektrische Energie zu entnehmen oder, je nach Typ, zur Aufladung zuzuführen.

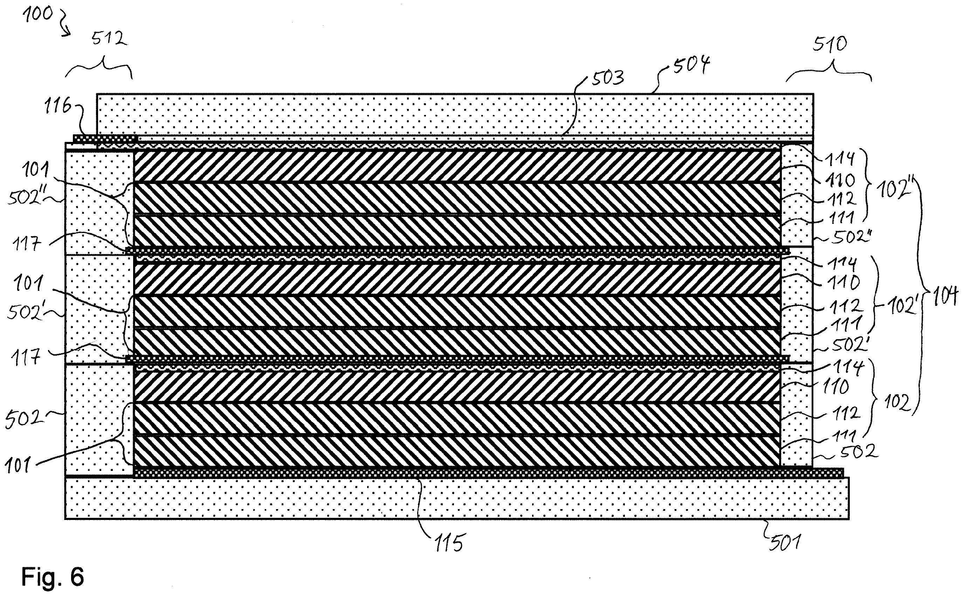

Fig. 2 zeigt eine Siebdruckvorrichtung 212 zur Herstellung der ersten Elektrodenschicht 101 eines Energiespeichers 100 gemäß Fig. 1. Die Siebdruckvorrichtung 212 umfasst eine Druckauflage 210, wobei die Druckauflage 210 zur Auflage eines Zellelements 102 (siehe Fig. 1) oder eines mehrere Zellelemente 102 umfassenden Zellstapels 104 (vgl. Fig. 6) des Energiespeichers 100 ausgebildet ist. Die Siebdruckvorrichtung 212 umfasst ein Drucksieb 200, welches eine Vielzahl von Sieböffnungen 202 aufweist. Die Siebdruckvorrichtung 212 umfasst ferner eine erste Auftragungsvorrichtung 221 enthaltend eine erste Paste 121 und eine zweite Auftragungsvorrichtung 222 enthaltend eine zweite Paste 122, mittels derer die Pasten 121, 122 auf das Drucksieb 200 auftragbar sind. Eine Streichvorrichtung 214 mit einer über das Drucksieb 200 streichbaren Rakel 215 ist zum Streichen der Pasten 121, 122 über das Drucksieb 200 und durch die Sieböffnungen 202 in Richtung der Druckauflage 210 ausgebildet.

Die erste Paste 121 und die zweite Paste 122 weisen beide ein identisches aktives Material auf, welches geeignet ist, als Elektronendonor oder lonendonor oder als Elektronenrezeptor oder lonenrezeptor zu wirken. Die zweite Paste 122 ist darüber hinaus mit einem Anteil von z. B. 10% porösen Separatormaterials versetzt. Beide Pasten enthalten einen Binder mit einem Epoxidharz und Essigsäurediethylenglycolmonobutyletherester als Lösungsmittel. Die Zusammensetzung der ersten Paste 121 ist derart gewählt, dass ihre Ruheviskosität 250 Pa s und ihre Scherviskosität 50 Pa s beträgt. Der Lösungsmittelgehalt der zweiten Paste 122 ist höher als der Lösungsmittelgehalt der ersten Paste 121 und derart gewählt, dass die zweite Paste 122 eine Ruheviskosität von 100 Pa s aufweist.

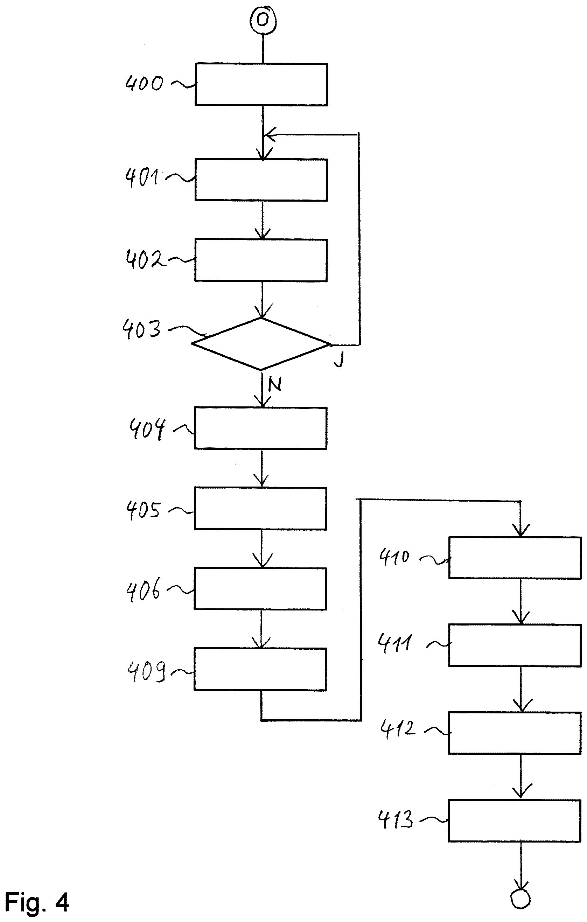

Nachfolgend soll anhand des Fig. 4 gezeigten Flussdiagramms unter Bezugnahme auf Fig. 1 bis 3 ein Verfahren zur Herstellung eines Energiespeichers 100 gemäß Fig. 1 mit Hilfe der Siebdruckvorrichtung 212 aus Fig. 2 erläutert werden. Das Verfahren beginnt mit Schritt 400, in dem eine erste metallische Ableiterschicht 115, die z. B. aus Nickel besteht, auf der Druckauflage 210 der Siebdruckvorrichtung 212 angeordnet wird. Dieser Schritt kann wahlweise mittels eines Siebdruckvorgangs oder auf andere Weise, z. B. durch Bereitstellen einer kommerziell erhältlichen Nickelfolie erfolgen.

In Schritt 401 wird durch Siebdrucken mit der ersten Paste 121 auf der ersten metallischen Ableiterschicht 115 die erste Elektrodenteilschicht 111 des Energiespeichers 100 ausgebildet. Hierzu wird mittels der ersten Auftragungsvorrichtung 221 eine geeignete Menge der ersten Paste 121 auf das Drucksieb 200 aufgetragen. Anschließend wird, wie in Fig. 2 gezeigt, mittels der Rakel 215 der Streichvorrichtung 214 die aufgetragene erste Paste 121 derart waagerecht über das Drucksieb 200 und zugleich senkrecht durch die Sieböffnungen 202 in Richtung der Druckauflage 210 gestrichen, dass auf der ersten metallischen Ableiterschicht 115 die erste Elektrodenteilschicht 111 ausgebildet wird.

In Schritt 402 wird die erste Elektrodenteilschicht 111 durch Wärmebestrahlung über 6 min getrocknet. Aufgrund der hohen Viskosität der ersten Paste 121 weist die erste Elektrodenteilschicht 111 nach dem Trocknen 402 eine nahezu quaderförmige Gestalt mit einer Überhöhung 301 des Randes von weniger als 1 µm und einem Kantenwinkel 300 von weniger als 1° auf.

In Verzweigungsschritt 403 wird festgestellt, ob eine weitere Elektrodenteilschicht siebgedruckt werden soll. Da dies vorliegend der Fall ist ("J"), wird nach Schritt 401 zurückverzweigt. In Schritt 401 wird nun durch Siebdrucken mit der zweiten Paste 122 auf der ersten Elektrodenteilschicht 111 die zweite Elektrodenteilschicht 112 des Energiespeichers 100 ausgebildet. Hierzu wird mittels der zweiten Auftragungsvorrichtung 222 eine geeignete Menge der zweiten Paste 122 auf das Drucksieb 200 aufgetragen. Anschließend wird, wie in Fig. 3 gezeigt, mittels der Rakel 215 der Streichvorrichtung 214 die aufgetragene zweite Paste 122 derart waagerecht über das Drucksieb 200 und zugleich senkrecht durch die Sieböffnungen 202 in Richtung der Druckauflage 210 gestrichen, dass auf der ersten Elektrodenteilschicht 111 die zweite Elektrodenteilschicht 112 ausgebildet wird.

Anschließend wird in Schritt 402 die zweite Elektrodenteilschicht 112 durch Wärmebestrahlung über 6 min getrocknet. Die auf diese Weise entstandene erste Elektrodenschicht 101 weist nach dem Trocknen 402 insgesamt ebenfalls eine nahezu quaderförmige Gestalt mit einer Überhöhung 301 des Randes von weniger als 5 µm und einem Kantenwinkel 300 von weniger als 5° auf.

In Verzweigungsschritt 403 wird erneut überprüft, ob noch eine weitere Elektrodenteilschicht siebgedruckt werden soll. Da dies nun nicht mehr der Fall ist ("N"), wird das Verfahren mit Schritt 404 fortgesetzt. In Schritt 404 wird durch Siebdrucken mit einer dritten Paste auf der zweiten Elektrodenteilschicht 112 die Separatorschicht 110 des Energiespeichers 100 siebgedruckt. Die dritte Paste wird hierfür aus dem porösen Separatormaterial und Binder mit einem Epoxidharz und Essigsäurediethylenglycolmonobutyletherester als Lösungsmittel zubereitet, wobei die Zusammensetzung des Binders und der Lösungsmittelgehalt so eingestellt wird, dass die dritte Paste eine Ruheviskosität von 200 Pa s und eine Scherviskosität von 50 Pa s aufweist. Dieser Siebdruckvorgang wird vorzugsweise ebenfalls mittels der Siebdruckvorrichtung 212 aus Fig. 2 durchgeführt.

Anschließend wird in Schritt 405 die Separatorschicht 110 durch Wärmebestrahlung über 6 min getrocknet. Die auf diese Weise entstandene Separatorschicht 110 weist nach dem Trocknen 405 insgesamt ebenfalls eine nahezu quaderförmige Gestalt mit einer Überhöhung 301 des Randes von weniger als 5 µm und einem Kantenwinkel 300 von weniger als 5° auf.

In Schritt 406 wird durch Siebdrucken mit einer vierten Paste auf der Separatorschicht 110 die zweite Elektrodenschicht 114 des Energiespeichers 100 ausgebildet. Die vierte Paste wird hierfür aus dem vorgesehenen metallischen Material wie Lithium oder Natrium und Binder zubereitet. Dieser Siebdruckvorgang wird vorzugsweise ebenfalls mittels der Siebdruckvorrichtung 212 aus Fig. 2 durchgeführt. Anschließend wird in Schritt 409 die zweite Elektrodenschicht 114 durch Wärmebestrahlung über 6 min getrocknet.

In Schritt 410 wird durch Siebdrucken mit einer fünften Paste auf der zweiten Elektrodenschicht 114 die zweite metallische Ableiterschicht 116 des Energiespeichers 100 ausgebildet. Die fünfte Paste wird hierfür aus dem vorgesehenen metallischen Material wie Nickel und Binder zubereitet. Dieser Siebdruckvorgang wird vorzugsweise ebenfalls mittels der Siebdruckvorrichtung 212 aus Fig. 2 durchgeführt. Anschließend wird in Schritt 411 die zweite metallische Ableiterschicht 116 durch Wärmebestrahlung über 6 min getrocknet. In Schritt 412 wird das resultierende Zellelement 102 mit den metallischen Ableiterschichten 115, 116 in einem Folienbeutel als Gehäuse 106 angeordnet und das Gehäuse 106 mit einem Flüssigelektrolyten befüllt. In Schritt 413 wird das Gehäuse auf eine solche Weise dicht verschlossen, dass die Enden der metallischen Ableiterschichten 115, 116 zur elektrischen Kontaktierung des Energiespeichers 100 in den Außenraum geführt sind.

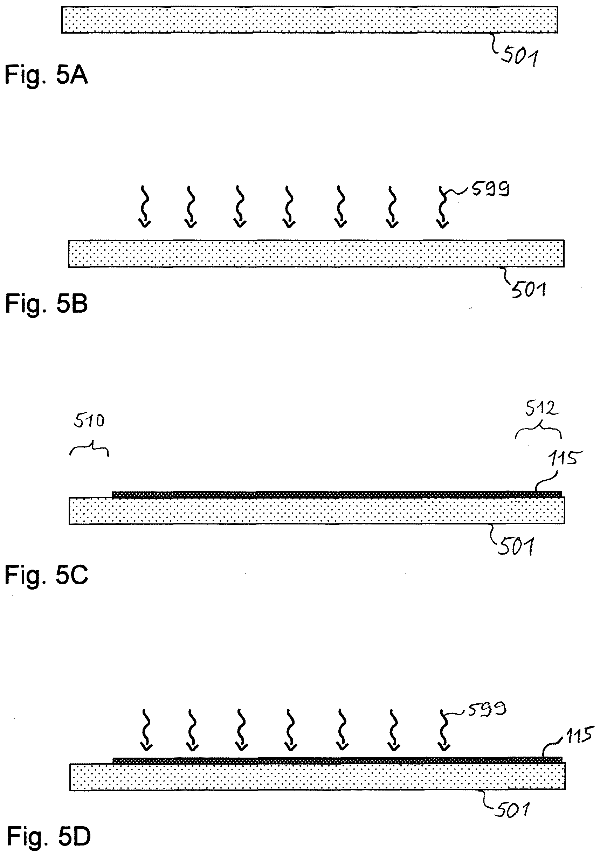

Als nächstes soll die Herstellung einer anderen Ausführungsform eines Energiespeichers 100 gemäß einem weiteren Verfahren anhand von Fig. 5A bis 5S beschrieben werden, in denen jeweils zugehörige Schritte A-S des Verfahrens schematisch dargestellt sind. Soweit es sich bei den Schritten um Siebdruckschritte handelt, können diese z. B. mittels der in Fig. 2 gezeigten Siebdruckvorrichtung 212 ausgeführt werden.

In einem in Fig. 5A dargestellten Schritt A wird auf einer nicht gezeigten Druckauflage, als welche die Druckauflage 210 der Siebdruckvorrichtung 212 verwendet werden kann, ein Gehäuseboden 501 des Energiespeichers 100 siebgedruckt. Hierfür wird eine durch Wärmestrahlung zu einem elektrisch nichtleitenden Werkstoff, der im Folgenden als Polyethylen angenommen werden soll, polymerisierbare Paste verwendet. Der resultierende Gehäuseboden 501 ist eine im Wesentlichen quaderförmige Schicht von ca. 200 µm bis 500 µm Dicke.

In Schritt B - dargestellt in Fig. 5B - wird der Gehäuseboden 501 über einen Zeitraum von ca. 6 min mit Wärmestrahlung 599 behandelt, um die Polymerisation des Polyethylens durchzuführen.

In Schritt C - dargestellt in Fig. 5C - wird auf dem Gehäuseboden 501 eine 10 µm dicke erste metallische Ableiterschicht 115 aus Nickel durch Auflegen oder Siebdrucken mit einer entsprechenden Paste aufgebracht. In Randnähe des Gehäusebodens 501 bleibt dabei ein streifenförmiger umlaufender Gehäuseseitenwandbereich, in dem auch ein erster Kontaktierbereich 512 und diesem gegenüber einen zweiter Kontaktierbereich 510 zur Kontaktierung des Energiespeichers 100 liegen, des Gehäusebodens 501 unbedeckt - bis auf den ersten Kontaktierbereich 512, in dem sich die erste metallische Ableiterschicht 115 im Wesentlichen bis zum Rand des Gehäusebodens 501 erstreckt.

In Schritt D - dargestellt in Fig. 5D - wird die erste metallische Ableiterschicht 115 mit Wärmestrahlung 599 getrocknet. Die Dauer der Bestrahlung beträgt wie auch in nachfolgenden Bestrahlungsschritten ebenfalls ca. 6 min.

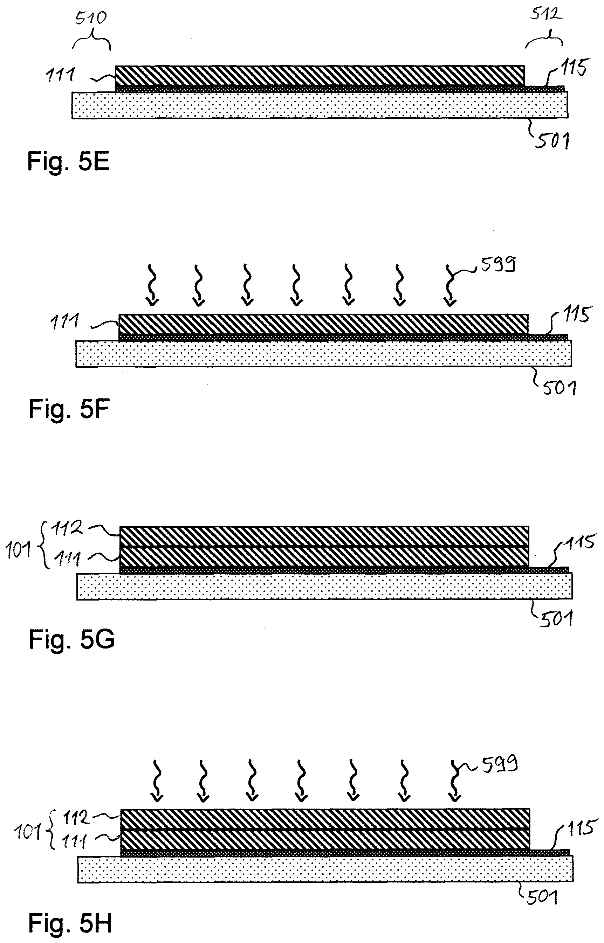

In Schritt E - dargestellt in Fig. 5E - wird eine erste Elektrodenteilschicht 111 mit einer Dicke von ca. 100 µm durch Siebdrucken auf die erste metallische Ableiterschicht 115 aufgetragen, wobei der erste Kontaktierbereich 512 ausgespart bleibt. Die hierfür verwendete Paste ist gleich zusammengesetzt und weist gleiche Eigenschaften auf wie die in Bezug auf Fig. 1 bis 3 bereits beschriebene erste Paste 121, weswegen auf eine nochmalige Erläuterung der Zusammensetzung hier verzichtet wird. In Schritt F - dargestellt in Fig. 5F - wird die erste Elektrodenteilschicht 111 mit Wärmestrahlung 599 getrocknet.

In Schritt G - dargestellt in Fig. 5G - wird eine zweite Elektrodenteilschicht 112 mit einer Dicke von ca. 50 µm durch Siebdrucken auf die erste Elektrodenteilschicht 111 aufgetragen. Die hierfür verwendete Paste ist gleich zusammengesetzt und weist gleiche Eigenschaften auf wie die in Bezug auf Fig. 1 bis 3 bereits beschriebene zweite Paste 122, enthält allerdings anstelle einer Beimischung eines porösen Separatormaterials einen entsprechenden Anteil eines ionischen Leiters. Die erste und zweite Elektrodenteilschicht 111, 112 bilden gemeinsam eine erste Elektrodenschicht 101 des Energiespeichers 100. In Schritt H - dargestellt in Fig. 5H - wird die zweite Elektrodenteilschicht 112 mit Wärmestrahlung 599 getrocknet.

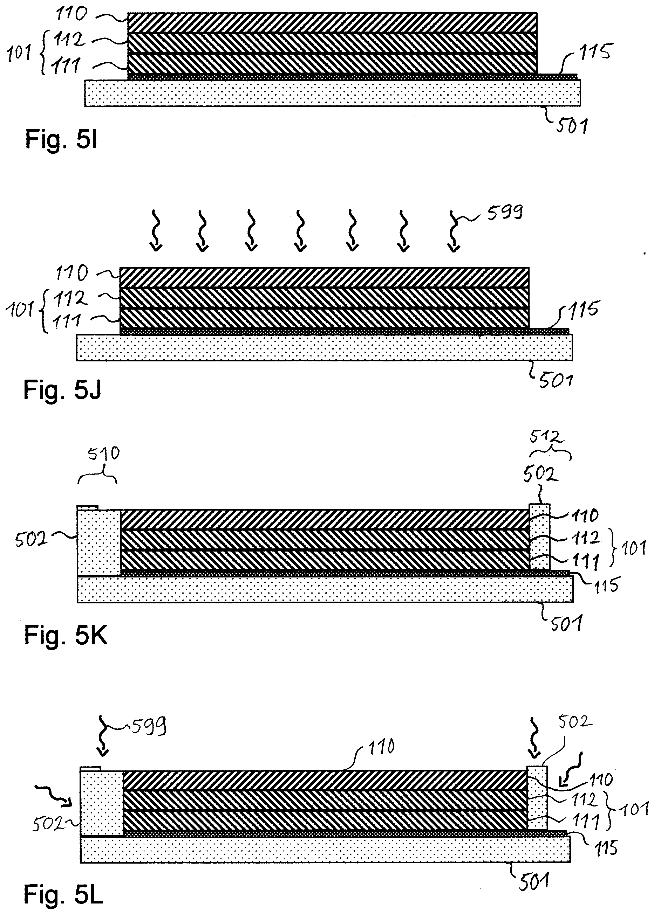

In Schritt I - dargestellt in Fig. 5I - wird eine Separatorschicht 110 aus einem Festelektrolytmaterial mit einer Dicke von ca. 10 µm bis 30 µm durch Siebdrucken auf die zweite Elektrodenteilschicht 112 aufgetragen. Das Festelektrolytmaterial enthält den gleichen ionischen Leiter wie anteilsmäßig bereits die zweite Elektrodenteilschicht 112, so dass sich ein Konzentrationsgradient des ionischen Leiters von der zweiten Elektrodenteilschicht 112 in die Separatorschicht 110 ergibt. In Schritt J - dargestellt in Fig. 5J - wird die zweite Separatorschicht 110 mit Wärmestrahlung 599 getrocknet.

In Schritt K - dargestellt in Fig. 5K - wird im umlaufenden Gehäuseseitenwandbereich einschließlich eines innenliegenden Abschnitts des ersten Kontaktierbereichs 512 eine umlaufende Gehäuseseitenwand 502 durch Siebdrucken mit dem gleichen Material, das in Schritt A für den Gehäuseboden 501 verwendet wurde, auf den Gehäuseboden 501 bzw. die erste metallische Ableiterschicht 115 aufgebracht. Im außenliegenden Abschnitt des ersten Kontaktierbereichs 512 liegt die erste metallische Ableiterschicht 115 weiterhin frei. Die Oberkante der Gehäuseseitenwand 502 fluchtet in einem innenliegenden Abschnitt des zweiten Kontaktierbereichs 510 mit der Oberkante der Separatorschicht 110, während sie in den übrigen Abschnitten ca. 10 µm höher als die Oberkante der Separatorschicht 110 liegt. In Schritt L - dargestellt in Fig. 5L - wird die Gehäuseseitenwand 502 mit Wärmestrahlung 599 getrocknet.

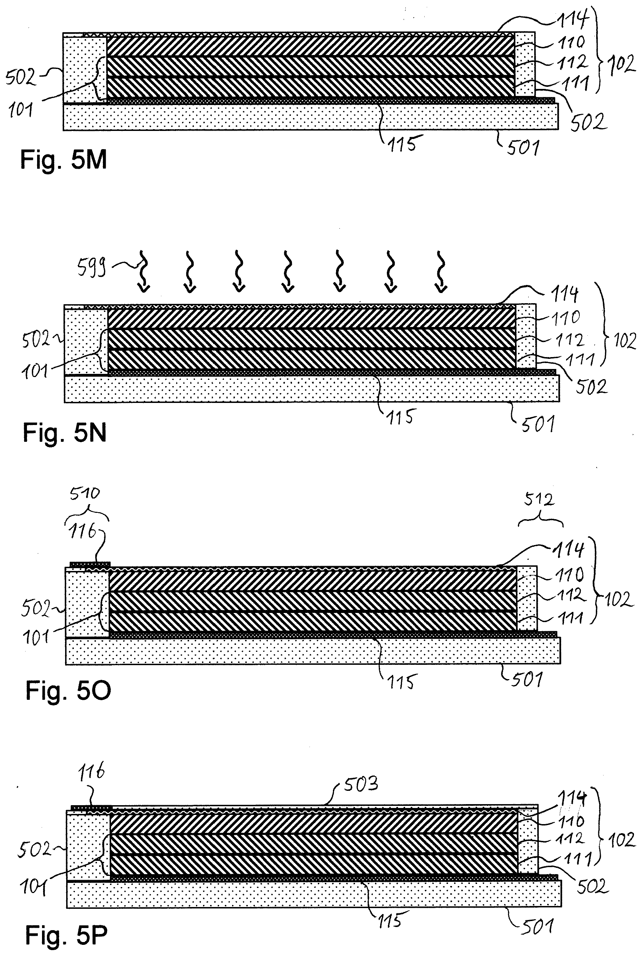

In Schritt M - dargestellt in Fig. 5M - wird eine zweite Elektrodenschicht 114 durch Siebdrucken eines metallischen Materials, bei dem es sich um Lithium, Natrium oder ein anderes Alkalimetall handeln kann, auf die Separatorschicht 110 und den innenliegenden Abschnitt des zweiten Kontaktierbereichs 510 aufgebracht. Die zweite Elektrodenschicht 114 ist ca. 10 µm dick, so dass sie mit der Oberkante der Gehäuseseitenwand 502 bündig abschließt. In Schritt N - dargestellt in Fig. 5N - wird die zweite Elektrodenschicht 114 mit Wärmestrahlung 599 getrocknet. Alternativ zur Herstellung der zweiten Elektrodenschicht 114 durch Siebdrucken in Schritt M und N kann die zweite Elektrodenschicht 114 auch durch Sprühen aufgebracht werden.

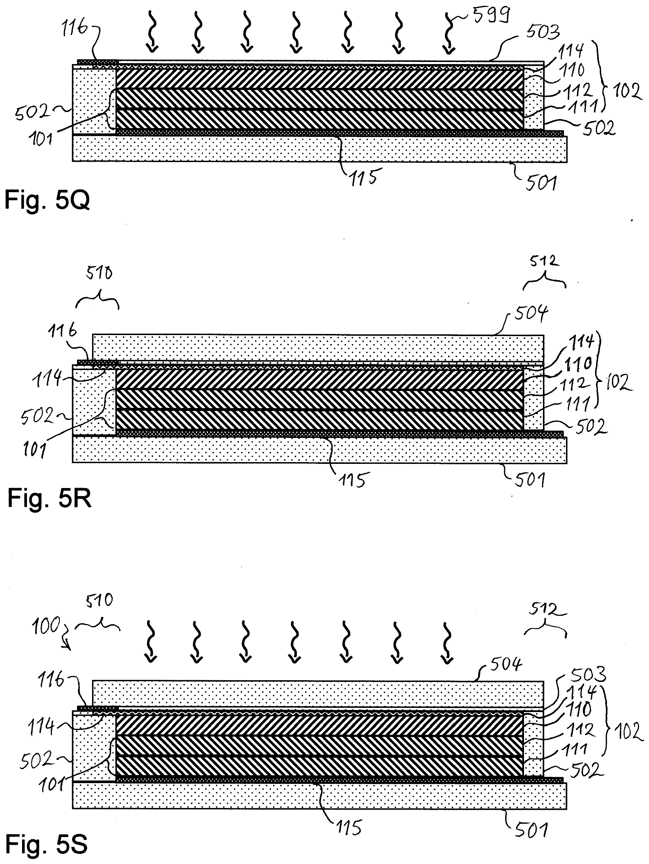

In Schritt O - dargestellt in Fig. 5O - wird im zweiten Kontaktierbereich 510 eine ca. 10 µm dicke zweite metallische Ableiterschicht 116 aus Nickel durch Siebdrucken mit einer entsprechenden Paste aufgebracht. Die zweite metallische Ableiterschicht 116 liegt im außenliegenden Abschnitt des zweiten Kontaktierbereichs 510 direkt auf der Gehäuseseitenwand 502, im innenliegenden Abschnitt des zweiten Kontaktierbereichs 510 auf der zweiten Elektrodenschicht 114, wird jedoch im gesamten zweiten Kontaktierbereich 510 mechanisch durch die Gehäuseseitenwand 502 abgestützt. In Schritt P - dargestellt in Fig. 5P - wird eine Höhenausgleichsschicht 503 der Dicke 10 µm mit dem gleichen Material, das für den Gehäuseboden 501 und die Gehäuseseitenwand 502 verwendet wurde, auf die noch freiliegenden Abschnitte der zweiten Elektrodenschicht 114 und der Gehäuseseitenwand 502 siebgedruckt. In Schritt Q - dargestellt in Fig. 5Q - werden die zweite metallische Ableiterschicht 116 und die Höhenausgleichsschicht 503 mit Wärmestrahlung 599 getrocknet bzw. polymerisiert.

In Schritt R - dargestellt in Fig. 5R - wird ein quaderförmiger Gehäusedeckel 504 einer Dicke von ca. 200 µm durch Siebdrucken mit dem gleichen Material, das für den Gehäuseboden 501, die Gehäuseseitenwand 502 und die Höhenausgleichsschicht 503 verwendet wurde, auf die Höhenausgleichsschicht 503 und - unter Aussparen des außenliegenden Abschnitts des zweiten Kontaktierbereichs 510 - die zweite metallische Ableiterschicht 116 aufgebracht. In Schritt S - dargestellt in Fig. 5S - wird der Gehäusedeckel 504 mit Wärmestrahlung 599 getrocknet bzw. polymerisiert.

Der hergestellte Energiespeicher 100 kann durch die in den außenliegenden Abschnitten des ersten Kontaktierbereichs 512 und des zweiten Kontaktierbereichs 510 jeweils freiliegenden Enden der ersten metallischen Ableiterschicht 115 und der zweiten metallischen Ableiterschicht 116 von oben elektrisch kontaktiert werden, wobei mechanische Belastungen in das Gehäuse abgeleitet werden, ohne das Zellelement 102 zu beeinträchtigen.

Fig. 6 zeigt einen weiteren Energiespeicher 100, der einen ähnlichen Aufbau hat, jedoch nicht nur ein einzelnes Zellelement 102, sondern einen Zellstapel 104 mit mehreren elektrisch in Reihe geschalteten Zellelementen 102, 102', 102" aufweist. Der Energiespeicher 100 kann mit einem Herstellungsverfahren hergestellt werden, das weitgehend mit dem anhand von Fig. 5A bis 5S beschriebenen übereinstimmt. Um Wiederholungen zu vermeiden, werden nachfolgend lediglich die Unterschiede dargestellt.

Nachdem Verfahrensschritte wie in Fig. 5A bis 5J gezeigt ausgeführt wurden, wird ähnlich wie in Fig. 5K gezeigt eine Gehäuseseitenwand 502 ausgebildet, die jedoch in Gänze die Separatorschicht 110 um 10 µm überragt. Anschließend wird eine zweite Elektrodenschicht 114 ähnlich wie in Fig. 5M gezeigt auf die Separatorschicht 110, nicht jedoch auf die Gehäuseseitenwand 502 aufgebracht, so dass die Gehäuseseitenwand 502 und die Separatorschicht 110 nach oben bündig miteinander abschließen.

Danach wird eine dritte metallische Ableiterschicht 117 auf die zweite Elektrodenschicht 114 und einen ringförmig an diese angrenzenden innenliegenden Abschnitt der Gehäuseseitenwand 502 aufgebracht, was auf die gleiche Weise wie bei der in der vorhergehenden Ausführungsform für die zweite metallische Ableiterschicht 116 erfolgen kann. Hierauf werden, um ein zweites Zellelement 102' des Zellstapels zu bilden, die Fig. 5E bis 5J entsprechenden Verfahrensschritte wiederholt, wobei die erste Elektrodenteilschicht 111 des zweiten Zellelements 102' auf die dritte metallische Ableiterschicht 117 aufgebracht wird. Auf die beschriebene Weise können wie in Fig. 6 gezeigt drei oder mehr Zellemente 102, 102', 102" ausgebildet werden, die über dazwischenliegende metallische Ableiterschichten 117 elektrisch miteinander in Reihe geschaltet und bezüglich ionischer Leiter voneinander getrennt sind.

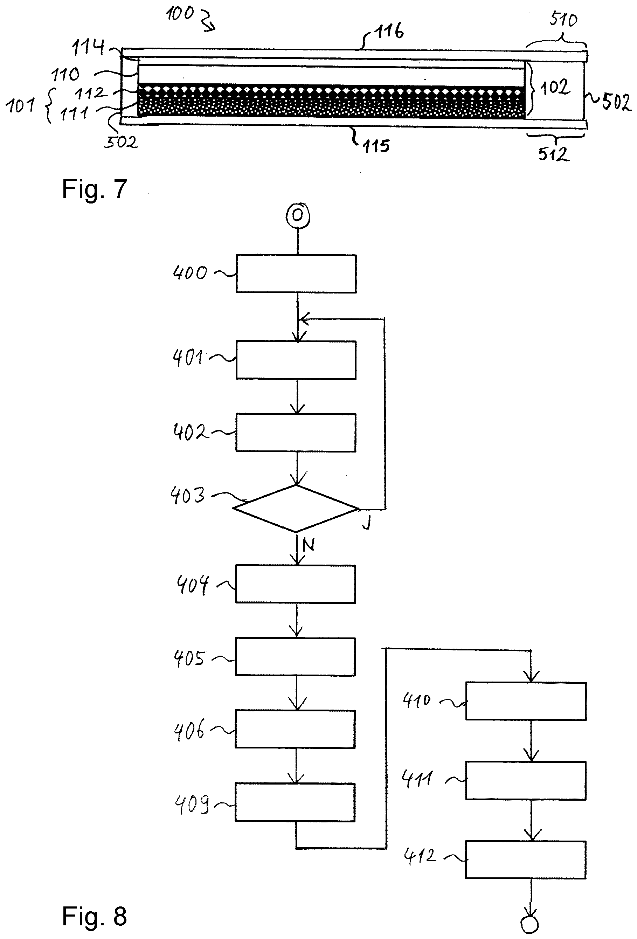

Fig. 7 zeigt, in einer schematischen Querschnittsansicht, einen Energiespeicher 100, der z. B. als eine Primär- oder Sekundärbatterie ausgebildet sein kann. Der Energiespeicher 100 umfasst ein elektrochemisches Zellelement 102. Das Zellelement 102 ist ein flächenhaft ausgedehnter, aus mehreren Schichten 110, 111, 112, 114 aufgebauter Schichtkörper, der eine erste Elektrodenschicht 101 und eine zweite Elektrodenschicht 114 aufweist. Zwischen der ersten Elektrodenschicht 101 und der zweiten Elektrodenschicht 114 befindet sich eine Separatorschicht 110 aus einem Festelektrolytmaterial.

Die erste Elektrodenschicht 101 besteht aus einer an die Separatorschicht 110 angrenzenden zweiten Elektrodenteilschicht 112 und eine an die von der Separatorschicht 110 abgewandte Seite der zweiten Elektrodenteilschicht 112 angrenzende erste Elektrodenteilschicht 111. Die zweite Elektrodenteilschicht 112 ist dünner als die erste Elektrodenteilschicht 111. Beispielsweise weist die erste Elektrodenteilschicht 111 eine Dicke von 150 µm auf, während die zweite Elektrodenteilschicht 112 eine Dicke von 150 µm aufweist. Beide Elektrodenteilschichten 111, 112 weisen ein aktives Material auf, welches geeignet ist, als Elektronendonor oder lonendonor oder als Elektronenrezeptor oder lonenrezeptor zu wirken. Insbesondere können während des Entladungsvorgangs des Energiespeichers 100 Elektronen durch eine chemische Reaktion in dem aktiven Material freigesetzt werden. Insbesondere können während eines Ladungsvorgangs des Energiespeichers 100 Elektronen oder Ionen durch eine chemische Reaktion in dem aktiven Material gebunden werden. Insbesondere kann es sich bei den chemischen Reaktionen um elektrochemische Reaktionen handeln. Die chemischen Reaktionen können reversibel ablaufen, je nachdem, ob der Energiespeicher entladen wird, um elektrische Energie bereitzustellen oder der Energiespeicher für die spätere Bereitstellung von elektrischer Energie aufgeladen wird. Die zweite Elektrodenteilschicht 112 enthält eine Beimischung des in der Separatorschicht 110 verwendeten Festelektrolytmaterials, so dass sie eine größere lonenleitfähigkeit als die erste Elektrodenteilschicht 111, jedoch eine geringere als die Separatorschicht 110 aufweist. Hierdurch ergibt sich ein abfallender Konzentrationsgradient an ionischem Leiter von der Separatorschicht 110 über die zweite Elektrodenteilschicht 112 zur ersten Elektrodenteilschicht 111, zugleich mit einem umgekehrten Konzentrationsgradienten an elektrischem Leiter.

Das Zellelement 102 ist von einer in seitlicher Richtung rings um das Zellelement 102 verlaufenden Gehäuseseitenwand 502 aus Polyethylen oder einem anderen geeigneten elektrischen Isolator umgeben. An der von der zweiten Elektrodenteilschicht 112 abgewandten Seite der ersten Elektrodenteilschicht 111 ist eine erste metallische Ableiterschicht 115 gebildet, die sich über die gesamte untere Fläche der ersten Elektrodenteilschicht 111 sowie der Gehäuseseitenwand 502 erstreckt. Die zweite Elektrodenschicht 114 weist ein metallisches Material, z. B. ein Alkalimetall wie Lithium oder Natrium auf. An der von der Separatorschicht 110 abgewandten Seite der zweiten Elektrodenschicht 114 ist eine zweite metallische Ableiterschicht 116 gebildet, die sich über die gesamte obere Fläche der zweiten Elektrodenschicht 114 sowie der Gehäuseseitenwand 502 erstreckt. Die im Außenraum zugänglichen Seiten der metallischen Ableiterschichten 115, 116 bilden elektrische Anschlüsse des Energiespeichers 100, um dem Energiespeicher 100 elektrische Energie zu entnehmen oder, je nach Typ, zur Aufladung zuzuführen. Insbesondere innerhalb eines ersten Kontaktierbereichs 512 und eines zweiten Kontaktierbereichs 510, die auf einem zu diesem Zweck verdickten Abschnitt der Gehäuseseitenwand 502 eingerichtet sind, lassen sich die ersten metallischen Ableiterschicht 115 und die zweiten metallischen Ableiterschicht 116 von oben und unten elektrisch kontaktieren, ohne das Zellelement 102 zu beeinträchtigen, da mechanische Belastungen in die Gehäuseseitenwand 502 abgeleitet werden.

Nachfolgend soll anhand eines in Fig. 8 gezeigten Flussdiagramms unter Bezugnahme auf Fig. 2 bis 3 und 7 ein Verfahren zur Herstellung eines Energiespeichers 100 gemäß Fig. 7 mit Hilfe der Siebdruckvorrichtung 212 aus Fig. 2 erläutert werden. Das Verfahren beginnt mit Schritt 400, in dem eine erste metallische Ableiterschicht 115, die z. B. aus Nickel besteht, auf der Druckauflage 210 der Siebdruckvorrichtung 212 angeordnet wird. Dieser Schritt kann wahlweise mittels eines Siebdruckvorgangs oder auf andere Weise, z. B. durch Bereitstellen einer kommerziell erhältlichen Nickelfolie erfolgen.

Um Wiederholungen zu vermeiden, wird zu den Schritten 401 bis 411 auf die obigen Erläuterungen der entsprechenden, mit den je gleichen Bezugszeichen versehenen Schritte 401 bis 411 aus Fig. 4 verwiesen. In Schritt 412, der in abgewandelten Ausführungsformen entfallen kann, wird das resultierende Zellelement 102 mit den metallischen Ableiterschichten 115, 116 in einem Gehäuse (nicht gezeigt) angeordnet.

## Patentansprüche

1. Verfahren zur Herstellung eines Energiespeichers (100), umfassend folgende Schritte:
Siebdrucken, auf einer Druckauflage (210), welche zur Auflage eines Zellelements (102) oder Zellstapels (104) des Energiespeichers (100) ausgebildet ist, einer ersten Paste (121), um eine erste Elektrodenteilschicht (111) einer Elektrodenschicht (101) des Zellelements (102) oder Zellstapels (104) aufzutragen; und
Siebdrucken einer zweiten Paste (122), welche von der ersten Paste (121) verschieden zusammengesetzt ist, unmittelbar auf die erste Elektrodenteilschicht (111), um eine zweite Elektrodenteilschicht (112) der Elektrodenschicht (101) aufzutragen, wobei die erste Paste (121) und die zweite Paste (122) ein identisches aktives Material aufweisen,
**dadurch gekennzeichnet, dass** die zweite Elektrodenteilschicht (112) dünner als die erste Elektrodenteilschicht (111) aufgetragen wird.

2. Verfahren nach Anspruch 1, wobei die erste Elektrodenteilschicht (111) mit einer Dicke von mindestens 50 µm aufgetragen wird.

3. Verfahren nach Anspruch 1 oder 2, wobei die zweite Elektrodenteilschicht (112) mit einer Dicke von höchstens 50 µm aufgetragen wird.

4. Verfahren nach Anspruch 3, wobei die zweite Elektrodenteilschicht (112) mit einer Dicke von höchstens 20 µm aufgetragen wird.

5. Verfahren nach einem der Ansprüche 1 bis 4, wobei die zweite Paste (122) einen höheren Gehalt eines ionischen Leiters oder einen geringeren Gehalt eines elektrischen Leiters aufweist als die erste Paste (121).

6. Verfahren nach einem der Ansprüche 1 bis 4, wobei die zweite Paste (122) einen geringeren Gehalt eines ionischen Leiters oder einen höheren Gehalt eines elektrischen Leiters aufweist als die erste Paste (121).

7. Verfahren nach einem der Ansprüche 1 bis 6, wobei die zweite Paste (122) einen höheren Lösungsmittelgehalt aufweist als die erste Paste (121).

8. Verfahren nach einem der Ansprüche 1 bis 7, umfassend ferner einen Schritt des Trocknens der ersten Elektrodenteilschicht (111) über eine Trocknungszeit von höchstens 10 min vor dem Siebdrucken der zweiten Paste (122).

9. Verfahren nach Anspruch 8, wobei die Trocknungszeit höchstens 6 min dauert.

10. Energiespeicher (100), welcher ein Zellelement (102) oder einen Zellstapel (104) mit einer durch Siebdrucken aufgetragenen ersten Elektrodenteilschicht (111) und einer auf die erste Elektrodenteilschicht (111) durch Siebdrucken aufgetragenen zweiten Elektrodenteilschicht (112) aufweist,
wobei die erste Elektrodenteilschicht (111) und die zweite Elektrodenteilschicht (112) verschieden zusammengesetzt sind und
wobei die erste Elektrodenteilschicht (111) und die zweite Elektrodenteilschicht (112) ein identisches aktives Material aufweisen,
**dadurch gekennzeichnet, dass** die zweite Elektrodenteilschicht (112) dünner als die erste Elektrodenteilschicht (111) aufgetragen ist.

## Claims

1. Method of manufacturing an energy storage device (100), comprising the following steps:
screen printing, on a printing support (210) adapted to support a cell element (102) or cell stack (104) of the energy storage device (100), a first paste (121) to apply a first electrode sublayer (111) of an electrode layer (101) of the cell element (102) or cell stack (104); and
screen printing a second paste (122) having a different composition from the first paste (121) directly onto the first electrode sublayer (111) to apply a second electrode sublayer (112) of the electrode layer (101), wherein the first paste (121) and the second paste (122) have an identical active material,
**characterised in that** the second electrode sublayer (112) is applied thinner than the first electrode sublayer (111).

2. Method according to claim 1, wherein the first electrode sublayer (111) is applied with a thickness of at least 50 µm.

3. Method according to claim 1 or 2, wherein the second electrode sublayer (112) is applied with a thickness of at most 50 µm.

4. Method according to claim 3, wherein the second electrode sublayer (112) is applied with a thickness of at most 20 µm.

5. Method according to any one of claims 1 to 4, wherein the second paste (122) has a higher content of an ionic conductor or a lower content of an electrical conductor than the first paste (121).

6. Method according to any one of claims 1 to 4, wherein the second paste (122) has a lower content of an ionic conductor or a higher content of an electrical conductor than the first paste (121).

7. Method according to any one of claims 1 to 6, wherein the second paste (122) has a higher solvent content than the first paste (121).

8. Method according to any one of claims 1 to 7, further comprising a step of drying the first electrode sublayer (111) over a drying time of at most 10 min prior to screen printing the second paste (122).

9. Method according to claim 8, wherein the drying time is at most 6 min.

10. Energy storage device (100) comprising a cell element (102) or a cell stack (104) having a first electrode sublayer (111) applied by screen printing and a second electrode sublayer (112) applied on the first electrode sublayer (111) by screen printing,
wherein the first electrode sublayer (111) and the second electrode sublayer (112) are composed differently, and
wherein the first electrode sublayer (111) and the second electrode sublayer (112) have an identical active material,
**characterised in that** the second electrode sublayer (112) is applied thinner than the first electrode sublayer (111).

## Revendications

1. Procédé de fabrication d'un dispositif de stockage d'énergie (100), comprenant les étapes suivantes :
sérigraphie, sur un support d'impression (210) adapté pour supporter un élément de cellule (102) ou un empilement de cellules (104) du dispositif de stockage d'énergie (100), d'une première pâte (121) pour appliquer une première sous-couche d'électrode (111) d'une couche d'électrode (101) de l'élément de cellule (102) ou de l'empilement de cellules (104) ; et
sérigraphie d'une deuxième pâte (122), composée différemment de la première pâte (121), directement sur la première sous-couche d'électrode (111) pour appliquer une deuxième sous-couche d'électrode (112) de la couche d'électrode (101), la première pâte (121) et la deuxième pâte (122) comprenant un matériau actif identique,
**caractérisé en ce que** la deuxième sous-couche d'électrode (112) est appliquée plus mince que la première sous-couche d'électrode (111).

2. Procédé selon la revendication 1, dans lequel la première sous-couche d'électrode (111) est appliquée avec une épaisseur d'au moins 50 µm.

3. Procédé selon la revendication 1 ou 2, dans lequel la deuxième sous-couche d'électrode (111) est appliquée avec une épaisseur d'au plus 50 µm.

4. Procédé selon la revendication 3, dans lequel la deuxième sous-couche d'électrode (112) est appliquée avec une épaisseur d'au plus 20 µm.

5. Procédé selon l'une des revendications 1 à 4, dans lequel la deuxième pâte (122) présente une teneur en conducteur ionique plus élevée ou une teneur en conducteur électrique plus faible que la première pâte (121).

6. Procédé selon l'une des revendications 1 à 4, dans lequel la deuxième pâte (122) présente une teneur en conducteur ionique plus faible ou une teneur en conducteur électrique plus élevée que la première pâte (121).

7. Procédé selon l'une des revendications 1 à 6, dans lequel la deuxième pâte (122) présente une teneur en solvant plus élevée que la première pâte (121).

8. Procédé selon l'une des revendications 1 à 7, comprenant en outre une étape de séchage de la première sous-couche d'électrode (111) pendant un temps de séchage d'au plus 10 min avant la sérigraphie de la deuxième pâte (122).

9. Procédé selon la revendication 8, dans lequel le temps de séchage dure au plus 6 min.

10. Dispositif de stockage d'énergie (100), qui comprend un élément de cellule (102) ou un empilement de cellules (104) avec une première sous-couche d'électrode (111) appliquée par sérigraphie et une deuxième sous-couche d'électrode (112) appliquée par sérigraphie sur la première sous-couche d'électrode (111),
la première sous-couche d'électrode (111) et la deuxième sous-couche d'électrode (112) étant composées différemment et
la première sous-couche d'électrode (111) et la deuxième sous-couche d'électrode (112) présentant un matériau actif identique,
**caractérisé en ce que** la deuxième sous-couche d'électrode (112) est appliquée plus mince que la première sous-couche d'électrode (111).
